# EUROPEAN PATENT SPECIFICATION

(11) **EP 0 597 931 B1**
(45) Date of publication and mention of the grant of the patent: **17.01.1996**
(21) Application number: 92916394.7
(22) Date of filing: 23.07.1992
(51) Int. Cl.: C08L 29/04, C08J 5/00, C08J 5/18, B32B 27/08

(54) **ETHYLENE VINYL ALCOHOL COPOLYMER WITH IMPROVED TOUGHNESS AND COMPATIBILITY**
Ethylen-Vinylalkohol-Copolymer mit verbesserter Zähigheit und Verträglichkeit
COPOLYMERE D'ETHYLENE/ALCOOL DE VINYLE PRESENTANT UNE ROBUSTESSE ET UNE COMPATIBILITE AMELIOREES

(30) Priority: 23.07.1991 US 734771
(43) Date of publication of application: 25.05.1994
(73) Proprietor: E.I. DU PONT DE NEMOURS AND COMPANY, Wilmington Delaware 19898 (US)
(72) Inventor: CHEN, John, Chu, Hockessin, DE 19707 (US); HOFMANN, George, Henry, Wilmington, DE 19803 (US)
(74) Representative: Abitz, Walter, Dr.-Ing.
(86) International application number: US9206001
(87) International publication number: WO9302139

(56) References cited:
- US-A- 4 600 746
- US-A- 4 645 695
- US-A- 4 971 864
- US-A- 4 977 212

## Description

### BACKGROUND OF THE INVENTION

This invention relates to compositions based on ethylene vinyl alcohol copolymer having properties of toughness and compatibility which are improved by addition of certain ethylene copolymers containing pendent anhydride functionality.

Ethylene vinyl alcohol copolymer is widely known for its excellent barrier properties to gases and other fluids and has found wide use in packaging and structural applications where barrier properties are important. Nevertheless, it has certain disadvantages in terms of toughness and compatibility with or adhesion to other polymers. Various approaches have been taken to minimize such problems.

In order to improve impact resistance, U.S. Patent 4,645,695 discloses a resinous composition of 95 to 50 parts by weight of a saponified product of ethylene vinyl acetate copolymer and 5 to 50 parts by weight of a product formed by modifying ethylene vinyl carboxylate ester copolymer or ethylene acrylate ester copolymer with an alpha, beta unsaturated carboxylic acid or anhydride thereof. Such composition can be melt extruded into a molded article which is superior in impact resistance. The composition can also be made into an inner layer of a laminated container.

U.S. Patent 4,971,864 discloses laminar articles comprising a combination of a polyolefin, an ethylene vinyl alcohol copolymer, and a compatibilizer of a polyolefin backbone (including an ethylene vinyl acetate copolymer) grafted with cyclic anhydride moieties.

U.S. Patent 4,600,746 discloses a polyvinyl alcohol alloy useful as a gas barrier material, prepared by reacting polyvinyl alcohol and a functional polymer, provide a mixture of grafted and ungrafted polymers. The functional polymer can be an ethylene ester copolymer having functional groups reactive with the hydroxyl groups of the polyvinyl alcohol polymer incorporated therein by copolymerization, including a carboxylic acid, a carboxylic acid anhydride, a metal salt of a carboxylic acid, or a derivative thereof. The composition has low permeability and water absorptivity, and can be melt extruded.

U.S. Patent 4,610,914 discloses a blend of ethylene vinyl alcohol copolymer with a thermoplastic polymer composition including, among others, anhydride modified ethylene vinyl acetate. Such blends can be used in films including multiple layer oriented films.

U.S. Patent 3,857,754 discloses a resinous composition excellent in processability and gas permeation resistance, which comprises (A) a crystalline polyolefin, (B) a saponified product of an ethylene vinyl acetate copolymer, and (C) a thermoplastic polymer containing a carbonyl group in the main or side chain thereof. Such thermoplastic polymers include those containing in the main or side chain carbonyl groups free from carboxylic acids, carboxylic acid salts, esters, anhydrides, or amides, carbonic acid esters, urethane, and urea; also included are copolymers of maleic anhydride with other vinyl monomers.

Ethylene copolymers contain grafted maleic anhydride comonomers have also been used as adhesives. U.S. Patent 4,861,676 discloses a blend of ethylene copolymer, ethylene copolymer modified by grafting with a comonomer containing pendant acid or acid derivative functionality, styrene polymer, and alicyclic resin modifier, for bonding polystyrene to barrier polymers. The grafted copolymer contains about 5 to about 55 weight percent copolymerized comonomer selected from the group consisting of unsaturated acids or esters thereof, vinyl esters, acrylonitrile, methacrylonitrile, and carbon monoxide (0-30 wt. %). Vinyl acetate is a preferred comonomer, but methyl acrylate, n-butyl acrylate, and the like, optionally with carbon monoxide present as a third monomer, are also suitable.

Terpolymers of ethylene, carbon monoxide, and one or more termonomers have been used to toughen certain structural polymers. U.S. Patent 3,870,140 discloses such polymers and blends thereof with a solid organic polymer such as vinyl halide polymers and vinylidene halide polymers. Suitable termonomers include unsaturated acids, esters thereof, vinyl esters of saturated carboxylic acids, vinyl alkyl ethers, acrylonitrile, methacrylonitrile, norbornene, alpha olefins, and vinyl aromatic compounds.

It has now been found that certain ethylene based copolymers, when modified by grafting with anhydride functionality, can be blended with ethylene vinyl alcohol copolymer to improve its toughness and its compatibility with other polymers. Such improvements in compatibility are particularly useful in the formation of multiple layer thermoformed articles, in which a certain amount of scrap is generated. The presence of a compatibilizing compound can permit such scrap polymer to be recycled as one or more layers of such articles, while retaining good physical properties.

### SUMMARY OF THE INVENTION

The present invention provides a melt blended composition comprising:
(a) 100 parts by weight of at least one ethylene vinyl alcohol copolymer having a copolymerized ethylene content of 20 to 50 mole percent and a degree of saponification least 90 percent, and
(b) at least one copolymer of
   (i) 40 to 79 weight percent ethylene comonomer,
   (ii) 0.5 to 30 weight percent of at least one comonomer selected from the group consisting of carbon monoxide and sulfur dioxide,
   (iii) 20 to 50 weight percent of at least one comonomer selected from the group consisting of unsaturated carboxylic acids, unsaturated derivatives of carboxylic acids other than anhydrides, and alkyl vinyl ethers; and
   (iv) 0.01 to 5 weight percent of at least one comonomer containing pendant carboxylic acid anhydride functionality,
   said copolymer of (b) present in an amount sufficient to provide an improvement in toughness to the ethylene vinyl alcohol composition.

The invention further provides blends of the above composition further comprising at least one additional thermoplastic polymer (c) which is compatible with the copolymer of (b), copolymer (b) being present in an amount suitable to provide compatibility between said ethylene vinyl alcohol copolymer (a) and said additional thermoplastic polymer (c).

The invention further provides extruded articles, including films, and multiple layer structures incorporating the above compositions.

### DETAILED DESCRIPTION OF THE INVENTION

The first component of the present invention is an ethylene vinyl alcohol (EVOH) copolymer. The EVOH is largely or entirely a copolymer of 20 to 50 mole percent ethylene monomer moieties and 50 to 80 mole percent vinyl alcohol (i.e. saponified vinyl acetate) monomer moieties. For applications for which barrier properties are particularly important, the copolymer will preferably comprise 20 to 40 mole percent ethylene monomer and 40 to 80 mole percent vinyl alcohol. For applications in which ease of formability is particularly important, the copolymer will preferably comprise 35 to 50, and more preferably 40 to 50, mole percent ethylene monomer. Other alkenes such as propylene may also be incorporated; and additional comonomers such as vinyl acetate, acrylates, acrylic or methacrylic acid or their derivatives may also be present in amounts suitable to provide processability and toughness to the polymer. If the copolymer comprises much less than 50 mole percent vinyl alcohol, the barrier properties of the polymer are diminished. If it comprises more than 80 mole percent vinyl alcohol, the processability of the copolymer is diminished, and in particular the thermoprocessability is diminished. In either event it becomes less suitable for certain applications such as a barrier layer for thermoformed structures. The vinyl alcohol moieties preferably should be substantially completely saponified, being, for example, at least 90%, preferably at least 95%, or most preferably at least 98% or even 99% saponified. Incomplete saponification leads to a reduction in barrier properties of the polymer, but can lead to improved processability; for this reason polymers with degrees of saponification as low as 80% can be used if desired.

The EVOH composition may also contain customary amounts (e.g up to 30 weight percent) of other modifiers as are known in the art for improving toughness, processability, thermal stability and the like, especially polymeric modifiers such as polyolefins, ethylene copolymers, ionomers, vinyl ester polymers, polyesters, polyethers, polyurethanes, elastomers, or polyamides such as are disclosed in U.S. Patent 4,990,562 and U.S. Application 07/578,410. Modest amounts of fillers, especially plate-like fillers such as mica and talc, can be added for applications in which barrier properties of the EVOH are important, provided they do not interfere with the desirable properties of the composition.

The second component of the present invention is an ethylene copolymer containing pendant carboxylic acid anhydride functionality. In particular it is a copolymer of 40 to 79 weight percent ethylene comonomer, 0.5 to 30 weight percent of at least one comonomer selected from the group consisting of carbon monoxide and sulfur dioxide, 20 to 50 weight percent of at least one comonomer selected from the group consisting of unsaturated carboxylic acids and unsaturated derivatives of carboxylic acids other than anhydrides, and 0.01 to 5, preferably 0.05 to 1.0, or 0.1 to 5 or 0.1 to 0.5 weight percent of at least one comonomer containing pendant carboxylic acid anhydride functionality.

The CO or SO₂ component of this copolymer is believed to serve to increase the polarity of the copolymer, thereby increasing the level of interaction with the EVOH copolymer and thus improving the toughening ability. It should be present in an amount at least sufficient to lead to such improvement. The upper limit of these comonomers is not clearly defined; 30 weight percent is considered to be a practical limit to the amount of such comonomer which can be copolymerized. Preferably this comonomer is carbon monoxide, and is present in an amount of 7-25 weight percent, more preferably 8 to 15 weight percent, and most preferably 10 to 14 weight percent.

The unsaturated acid or derivative component of this copolymer is preferably selected from the group consisting of unsaturated mono- or dicarboxylic acids having 3-18 carbon atoms, alkyl esters of such acids having 1-18 carbon atoms in the alkyl group, unsaturated alkyl nitriles having 3-18 carbon atoms, vinyl esters of saturated carboxylic acids where the acid group has 3-18 carbon atoms, and alkyl vinyl ethers wherein the alkyl group has 1-18 carbon atoms. Suitable comonomers include acrylic acid, methacrylic acid, vinyl acetate, alkyl acrylates and methacrylates having alkyl groups such as methyl, ethyl, propyl, isopropyl , n-butyl, isobutyl, t-butyl, n-pentyl, n-hexyl, 2-ethylhexyl, and the like, propyl vinyl ether, acrylonitrile, and methacrylonitrile. Preferred comonomers are alkyl acrylates and methacrylates, in particular is n-butyl acrylate. The comonomer selected from this group will preferably comprise 25 to 45 weight percent, and more preferably 27 to 40 weight percent, and most preferably 28 to 30 weight percent, of the main chain of the copolymer.

The final comonomer of this copolymer is at least one comonomer containing pendant carboxylic acid anhydride functionality. This comonomer can be incorporated in the polymer chain itself by well-known radical initiated polymerizations processes. Preferably, however, this comonomer is grafted onto the main chain of the polymer. The grafting monomer is selected from the group consisting of ethylenically unsaturated di-, or polycarboxylic acid anhydrides and ethylenically unsaturated carboxylic acid anhydrides. Examples of suitable anhydrides include itaconic anhydride, maleic anhydride, and dimethyl maleic anhydride; maleic anhydride (which may also be prepared from fumaric acid) is preferred.

The method for grafting of the comonomer onto the ethylene copolymer can be any of the processes which are well known in the art. For example, grafting can be carried out in the melt without a solvent, as disclosed in European Patent Application 0 266 994, or in solution or dispersion. Melt grafting can be done using a heated extruder, a Brabender^{TM} or Banbury^{TM} mixer or other internal mixers or kneading machines, roll mills, and the like. The grafting may be carried out in the presence of a radical initiator such as a suitable organic peroxide, organic perester, or organic hydroperoxide. The graft copolymers are recovered by any method which separates or utilizes the graft polymer that is formed. Thus the graft copolymer can be recovered in the form of precipitated fluff, pellets, powders, and the like.

The amount of monomer grafted onto the ethylene copolymer is not particularly limiting, and may be as low as 0.01 weight percent or as much as 5 percent or even more, based on the weight of the grafted ethylene copolymer. Preferably the amount of graft comonomer is 0.05 to 1.0 or 1.5 percent of the composition, and more preferably 0.1 to about 0.5 percent.

It is possible that certain amounts of ungrafted copolymer can also be present. Sometimes, for example, anhydride grafted copolymer compositions comprise a certain fraction of copolymer which is grafted and a fraction which is not grafted. This might arise as an artifact of the grafting process or it may be the result of a mixing process designed to reduce the cost of the relatively expensive grafted material. The presence of an ungrafted copolymer portion, otherwise chemically similar to the grafted copolymer, is specifically contemplated as an equivalent included within the scope of the present invention, provided that the overall amount of pendant anhydride functionality in the composition remains sufficiently high to provide the desired improvements.

The second, anhydride-containing, copolymer is present in an amount sufficient to provide an improvement in the impact toughness of the ethylene vinyl alcohol composition. Normally this result is achieved by the presence of 1 to 100 parts by weight, based on 100 parts by weight of the EVOH. Preferably the amount of the anhydride-containing copolymer is 5 to 50 parts by weight, more preferably 11 to 45 parts by weight, and most preferably 15 to 25 parts by weight. Even higher amounts of component (b) can be added, however, when it is desired that this component function also as a compatibilizing agent, as described below.

Melt blends of the present composition exhibit improved impact strength, compared with the corresponding ethylene vinyl alcohol copolymer alone. Toughened blends of EVOH are useful in making structures which require both mechanical strength and barrier properties, such as bottles and other containers. Similarly, the toughened composition of the present invention can be used as liners for articles having foamed insulation to prevent migration of foaming agent. This application can be used for styrenic polymer refrigerator liners, which can otherwise be subject to damage from hydrochlorofluorocarbons used as blowing agents for the refrigerator insulation.

Blends of the present compositions, furthermore, exhibit improved compatibility with certain other polymers. That is, when even relatively large amounts of certain polymers are blended with the EVOH/anhydride grafted polymer, the resulting composition will retain structural strength, and not exhibit general structural defects associated with incompatibility of polymer blends. In particular, the polymers which have been found to be suitable for such use are those which exhibit miscibility or compatibility with the anhydride-containing copolymer (b). Compatibility means that the component polymers exhibit sufficient interactions at their interface that they can form a thermodynamically stable mixture. Compatibility of polymer is often revealed by improved mechanical properties such as toughness or long-term property retention. Examples of suitable polymers include styrenic polymers such as polystyrene homopolymer, polystyrene copolymers with such comonomers as acrylonitrile, butadiene, acrylic or acrylic acid, acrylonitrile-butadiene-styrene polymers, high impact polystyrene (e.g. polystyrene modified with styrene-butadiene block copolymer); vinyl and vinylidene chloride polymers and copolymers such as polyvinyl chloride, alkyl acrylate homopolymers and copolymers, alkyl methacrylate homopolymers and copolymers such as polymethyl methacrylate, and ethylene homo- and copolymers such as low density polyethylene, linear low density polyethylene, high density polyethylene, ethylene vinyl acetate copolymerse, ethylene methyl methacrylate copolymers, and ethylene n-butyl acrylate copolymers. Many of these materials are normally considered structural polymers, since they have generally good structural strength and are comparatively low cost.

Therefore, the present invention also includes blends of EVOH and copolymers containing pendant carboxylic acid anhydride functionality, as described above, with polymers of the aforementioned group. The amount of the third component polymer is not particularly limited. Preferably the amount can be up to about 5000 parts by weight, and more preferably up to about 3500 parts by weight, based on 100 parts by weight of the ethylene vinyl alcohol copolymer. Most preferably the amount is up to about 900 parts by weight based on 100 parts of EVOH. Within these limits the compositions exhibit improved compatibility and improved physical properties such as impact toughness when a sufficient amount of the anhydride-containing copolymer (b) is present. In this embodiment of the invention, the amount of the anhydride-containing copolymer of (b) should be sufficient to provide compatibility fo the EVOH with the third component polymer. This amount is normally about 10 to about 500 parts by weight, based on 100 parts of the EVOH of (a), preferably about 100 to about 200 parts by weight.

The compatibility of the blends described above can be particularly useful for industrial operations in which the EVOH composition is used as one layer of a multilayer structure or sheet, and one of the above-named polymers is present as a second layer, for example to provide structural support. In some industrial operations material trimmed from the edge of such a sheet is ground and melt blended together, and the melt blend is recycled as an additional regrind layer in the structure. The present invention provides such a regrind layer with sufficient structural integrity to maintain the strength and toughness of the total multilayer structure. Industrial operations in which such regrind and recycle operations may be important include manufacturing of industrial hose and tubint, formation of multilayer bottles or other containers, thermoforming sheets for articles such as bathtubs, and thermoforming of refrigerator liners, as disclosed in more detail in U.S. serial number 07/648,007, the disclosure of which is incorporated herein by reference. It is thus possible to initially use the anhydride-containing copolymer, described above, as an adhesive layer between a layer of one of the above-named structural polymers or a regrind layer, on one side, and a composition of EVOH on the other side. The EVOH composition can be neat EVOH or a toughened blend of the present invention. The anhydride-containing polymer which serves as the adhesive layer can be present in a sufficient amount that material trimmed from the edge of such a sheet can be reground, melted, and recycled into the structure as a separate layer without sacrificing structural integrity of the resulting article. Articles and processes illustrating this application are set forth in more detail in copending U.S. Application (Docket Number AD-5937-A), filed concurrently with this Application, the disclosure of which is incorporated herein by reference.

### Examples 1-2 and Comparative Example C1

Melt blends were prepared of ethylene vinyl alcohol copolymer, containing 32 mole percent copolymerized ethylene, melt index 1.3 dg/min., 99+% saponified, with a copolymer of ethylene, 28 weight percent n-butyl acrylate, and 14 weight percent carbon monoxide, grafted with 0.3 weight percent maleic anhydride, melt index 4. The relative amounts of the polymers in the blend are shown in Table I. Films 25 micrometers (1 mil) thick were prepared from the compositions by extrusion casting from a 28 mm twin screw extruder and were subjected to a pinhole flex test (ASTM F-456). The results are shown in Table I, along with the results of comparable tests performed on an ethylene vinyl alcohol copolymer without the toughening polymer.

**TABLE I**

| Pinhole Flex | | | | |
|---|---|---|---|---|
| Ex. | EVOH, % | EnBACO-g-MAnh, % | MD | TD |
| 1 | 85 | 15 | 10502 | 11069 |
| 2 | 80 | 20 | 10943 | 17528 |
| C1 | 100 | 0 | 1641 | 1646 |

The results show that the addition of the toughening polymer markedly increases the flex toughness of the composition. Good barrier properties are retained.

### Examples 3-8 and Comparative Example C2.

Melt blends were prepared of ethylene vinyl alcohol copolymer, containing 44 ((Confirm this please)) mole percent copolymerized ethylene, melt index 5.5, 99+% saponified, with a copolymer of ethylene, n-butyl acrylate, and carbon monoxide, grafted with maleic anhydride. The relative amounts of the polymers in the blend are shown in Table II. In this table, graft copolymer A contains 30 weight percent n-butyl acrylate and 10 weight percent carbon monoxide copolymers, grafted with 0.9 weight percent maleic anhydride. Graft copolymer B contains 28 weight percent n-butyl acrylate and 14 weight percent carbon monoxide copolymers, grafted with 0.8 weight percent maleic anhydride. Standard test bars were prepared and the notched Izod (ASTM D-256), tensile strength (ASTM D-638), and elongation to break were measured. The results are shown in Table II.

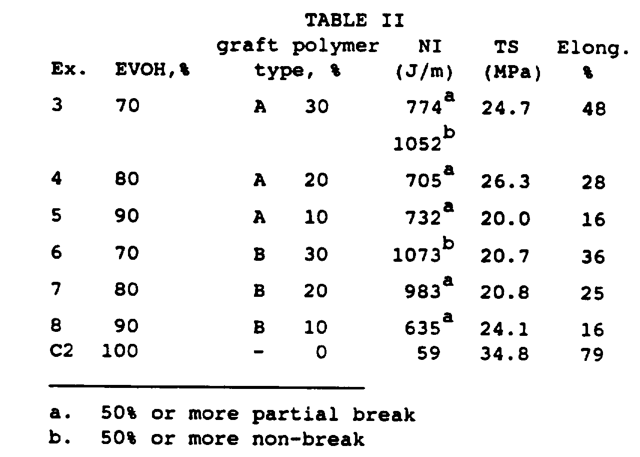

The results show improvement in impact strength by greater than an order of magnitude by use of the toughener of the present invention.

### Examples 8-11 and Comparative Examples C3 - C5

Blends were prepared from a rigid polyvinyl chloride composition, ethylene vinyl alcohol copolymer containing 44 ethylene, and a copolymer of 0.9% maleic anhydride grafted onto a backbone of a copolymer of ethylene, 30 weight percent n-butyl acrylate, and 10 weight percent CO. The PVC composition comprised 77.2% PVC ("Oxy 225"), 1.9% butyl tin stabilizer ("Irgastab T-634"), 3.9% ethylene vinyl acetate impact modifier ("Elvaloy® 4924), 1.5% acrylic processing aid ("Paraloid K-120N), 1.2% each of calcium stearate and "Advawax" 280 lubricants, 3.9% calcium carbonate and 9.3% titanium dioxide ("R-930). The PVC and the grafted copolymer were added to a Haake^{TM} mixer (roller blades, 75 RPM, set point 180°C) and mixed for 1-2 minutes. The vinyl alcohol copolymer was then added and mixing was continued at 200 RPM until a melt temperature of 195-205°C was reached. The blend was mixed for an additional 5 minutes at temperature. The blend was discharged and cooled using solid carbon dioxide. Test specimens 3.2 mm (1/8 inch) thick were prepared by molding at 180°C and 280 MPa (40 kpsi) for 1 minute. Compositions of the blends are as shown in Table III. The properties of the resulting blends were measured and are reported in Table III, along with corresponding properties for the unblended polyvinyl chloride and EVOH.

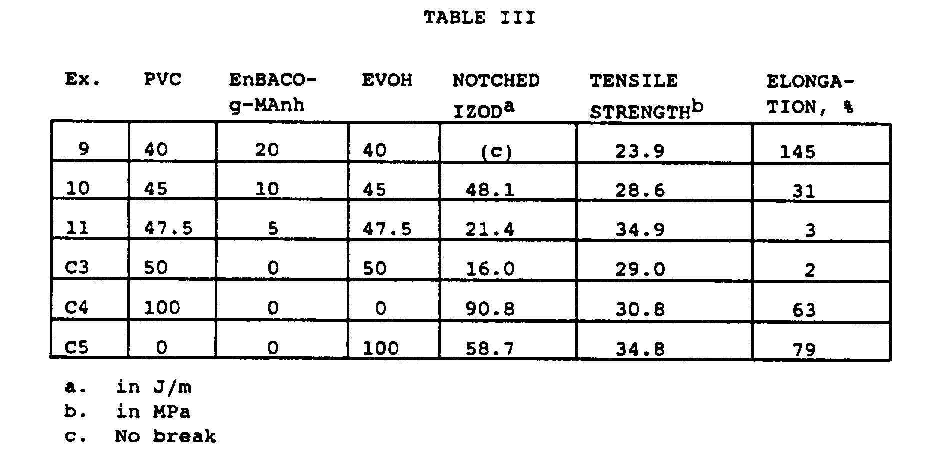

The results show that blends of PVC and EVOH which contain grafted copolymer as a compatibilizer exhibit significantly improved impact strength (Notched Izod) and elongation to break than do comparable blends without the compatibilizer.

### Examples 12-13 and Comparative Examples C6 and C7.

Pellet blends of the polymers indicated in Table IV were melted and extruded using a 28 mm twin screw extruder, followed by injection molding into 3.2 x 76 x 127 mm (1/8 x 3 x 5 inch) plaques. The plaques were tested at room temperature for Gardner impact toughness (ASTM D-3029). Good toughness was obtained in blends of EVOH and ABS when the graft copolymer was present.

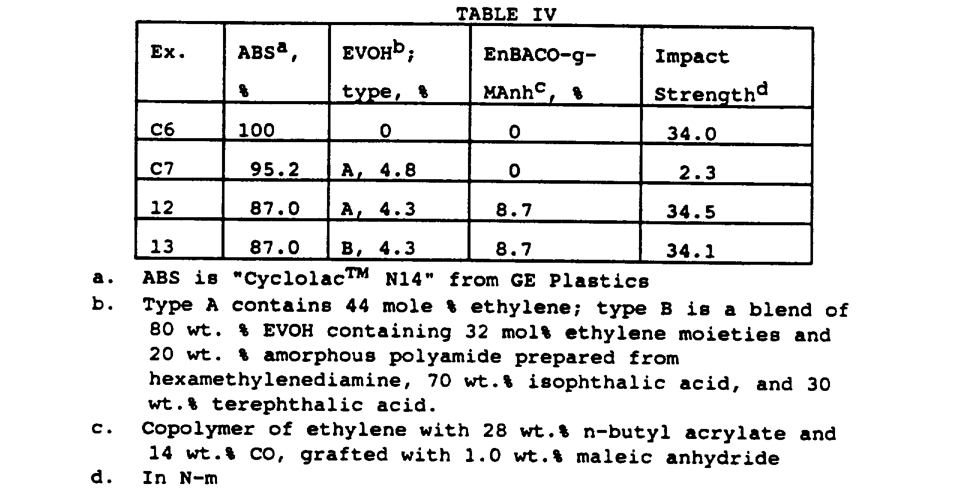

### Examples 14 and 15 and Comparative Examples C8 and C9

The following examples were run under the same conditions as those presented in Table IV. The results, in Table V, show that impact toughness is achieved by incorporation of the grafted compatibilizer resin.

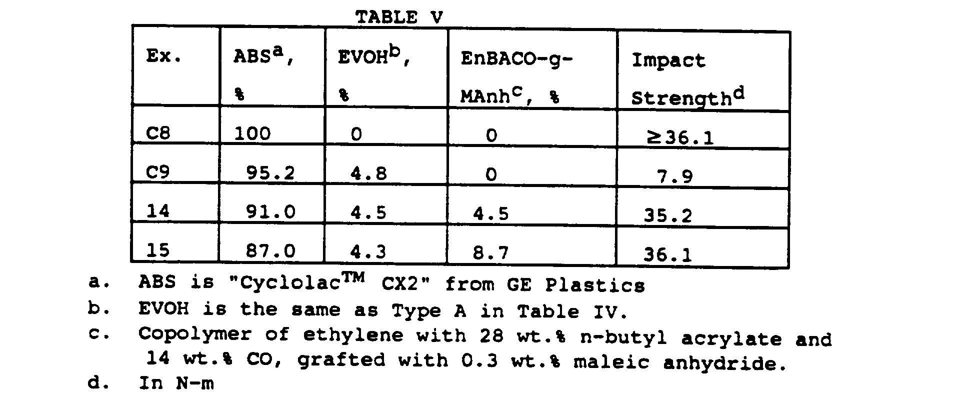

### Examples 16 and 17 and Comparative Example 10.

Two- or three-layer films were prepared by extrusion lamination of a 127 micrometer (5 mil) layer of the EVOH used in Example 12 to a layer 127 micrometers (5 mil) thick of an adhesive composition (Film A) or to two layers, each 64 micrometers (2.5 mils) thick of the adhesive composition, one layer on each side of the EVOH layer (Film B). In both cases the adhesive composition was a blend of 80 parts of the graft copolymer of Example 12 and 20 parts of an ungrafted copolymer of ethylene, 30 wt.% n-butyl acrylate, and 10 wt.% CO, melt index 100 dg/min. The films can be used directly in lamination with an ABS sheet to provide a multiple layer structure in which the graft copolymer blend serves as an adhesive layer. To demonstrate regrind capability, samples of Film A and Film B, respectively, were cut into pieces about 1 cm square and dry blended with ABS in the proportions indicated in Table VI. The dry blends were melt blended and then formed into test plaques as described above, and Gardner impact was measured, as described above. The results, reported in Table VI, indicate that the adhesive layer functions as a compatibilizer in the melt blend to provide blends with good impact strength.

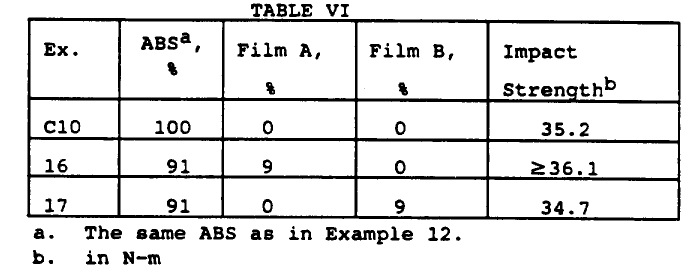

### Examples 18-19 and Comparative Example C11.

Blends of EVOH containing 30 mol % ethylene moieties with the graft copolymer of Example 12 were prepared in the concentrations shown in Table VII. Melt blends were cast into 25 micrometer (1 mil) films and tested for oxygen barrier at 30°C and 81% relative humidity (ASTM D-3985). The results are shown in Table VII. Similar films were subjected to the flex test, as above. The results, for both machine direction and transverse direction tests, are likewise reported in Table VII. These results show that such blends exhibit very good barrier properties and improved flex life, when compared with the EVOH alone.

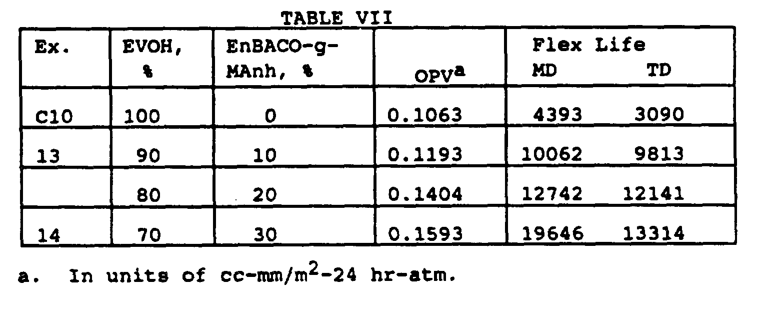

## Claims

1. A melt blended composition comprising:
(a) at least one ethylene vinyl alcohol copolymer having a copolymerized ethylene content of 20 to 50 mole percent and a degree of saponification of at least 90 percent, and
(b) at least one copolymer of
(i) 40 to 79 weight percent ethylene comonomer,
(ii) 0.5 to 30 weight percent of at least one comonomer selected from the group consisting of carbon monoxide and sulfur dioxide,
(iii) 20 to 50 weight percent of at least one comonomer selected from the group consisting of unsaturated carboxylic acids, unsaturated derivatives of carboxylic acids other than anhydrides, and alkyl vinyl ethers; and
(iv) 0.01 to 5 weight percent of at least one comonomer containing pendant carboxylic acid anhydride functionality,
said copolymer of (b) present in an amount sufficient to provide an improvement in toughness to the ethylene vinyl alcohol composition, said amount being from 1 to 100 parts by weight based on 100 parts by weight of the EVOH, preferably 5 to 50, more preferably 11 to 45, most preferably 15 to 25 parts by weight.

2. The melt blended composition of Claim 1 wherein the copolymer of (b) is present in an amount of 1 to 100 parts by weight per 100 parts by weight of the ethylene vinyl alcohol copolymer of (a).

3. The melt blended composition of Claim 1 wherein the comonomer containing pendant carboxylic acid anhydride functionality is a graft comonomer.

4. The melt blended composition of Claim 3 wherein the comonomer containing pendant carboxylic acid anhydride functionality is maleic anhydride.

5. The melt blended composition of Claim 4 wherein the amount of maleic anhydride is 0.05-1.0 percent by weight of the graft copolymer.

6. The melt blended composition of Claim 4 wherein the amount of maleic anhydride is 0.1-0.5 percent by weight of the graft copolymer.

7. The melt blended composition of Claim 1 wherein the comonomer of (ii) is carbon monoxide.

8. The melt blended composition of Claim 7 wherein the amount of copolymerized carbon monoxide is 7 to 25 percent by weight.

9. The melt blended composition of Claim 7 wherein the amount of copolymerized carbon monoxide is 8 to 15 percent by weight.

10. The melt blended composition of Claim 1 wherein the comonomer of (iii) is selected from the group consisting of unsaturated mono- or dicarboxylic acids having 3-18 carbon atoms, alkyl esters of such acids having 1-18 carbon atoms in the alkyl group, unsaturated alkyl nitriles having 3-18 carbon atoms, vinyl esters of saturated carboxylic acids where the acid group has 3-18 carbon atoms, alkyl vinyl ethers wherein the alkyl group has 1-18 carbon atoms.

## Patentansprüche

1. Schmelzgemischte Zusammensetzung, umfassend:
(a) wenigstens ein Ethylen-Vinylalkohol-Copolymer, das einen copolymerisierten Ethylengehalt von 20 bis 50 Mol-% und einen Verseifungsgrad von wenigstens 90 % aufweist, und
(b) wenigstens ein Copolymer aus
(i) 40 bis 79 Gew.-% Ethylen-Comonomer,
(ii) 0,5 bis 30 Gew.-% wenigstens eines Comonomeren, ausgewählt aus der Gruppe, bestehend aus Kohlenmonoxid und Schwefeldioxid,
(iii) 20 bis 50 Gew.-% wenigstens eines Comonomeren, ausgewählt aus der Gruppe, bestehend aus ungesättigten Carbonsäuren, ungesättigten Derivaten von Carbonsäuren, außer Anhydriden, und Alkylvinylethern, und
(iv) 0,01 bis 5 Gew.-% wenigstens eines Comonomeren, das eine angehängte Carbonsäureanhydrid-Funktionalität enthält,
wobei das Copolymer von (b) in einer Menge vorhanden ist, die ausreicht, um eine Verbesserung in der Zähigkeit der Ethylen-Vinylalkohol-Zusammensetzung bereitzustellen, wobei die Menge, bezogen auf 100 Gewichtsteile des EVOH, 1 bis 100 Gewichtsteile, vorzugsweise 5 bis 50, mehr bevorzugt 11 bis 45, am meisten bevorzugte 15 bis 25 Gewichtsteile beträgt.

2. Schmelzgemischte Zusammensetzung nach Anspruch 1, worin das Copolymer von (b) in einer Menge von 1 bis 100 Gewichtsteilen pro 100 Gewichtsteile des Ethylenvinylalkohol-Copolymeren von (a) vorhanden ist.

3. Schmelzgemischte Zusammensetzung nach Anspruch 1, worin das Comonomer, das eine angehängte Carbonsäureanhydrid-Funktionalität enthält, ein Pfropfcomonomer ist.

4. Schmelzgemischte Zusammensetzung nach Anspruch 3, worin das Comonomer, das eine angehängte Carbonsäureanhydrid-Funktionalität enthält, Maleinsäureanhydrid ist.

5. Schmelzgemischte Zusammensetzung nach Anspruch 4, worin die Menge an Maleinsäureanhydrid 0,05 bis 1,0 Gew.-% des Pfropfcopolymeren beträgt.

6. Schmelzgemischte Zusammensetzung nach Anspruch 4, worin die Menge an Maleinsäureanhydrid 0,1 bis 0,5 Gew.-% des Propf-Copolymeren beträgt.

7. Schmelzgemischte Zusammensetzung nach Anspruch 1, worin das Comonomer von (ii) Kohlenmonoxid ist.

8. Schmelzgemischte Zusammensetzung nach Anspruch 7, worin die Menge des copolymerisierten Kohlenmonoxids 7 bis 25 Gew.-% beträgt.

9. Schmelzgemischte Zusammensetzung nach Anspruch 7, worin die Menge des copolymerisierten Kohlenmonoxids 8 bis 15 Gew.-% beträgt.

10. Schmelzgemischte Zusammensetzung nach Anspruch 1, worin das Comonomer von (iii) ausgewählt ist aus der Gruppe, bestehend aus ungesättigten Mono- oder Dicarbonsäuren, die 3-18 Kohlenstoffatome aufweisen, Alkylestern von solchen Säure, die 1-18 Kohlenstoffatome in der Alkylgruppe aufweisen, ungesättigten Alkylnitrilen, die 3-18 Kohlenstoffatome aufweisen, Vinylestern von gesättigten Carbonsäuren, worin die Säuregruppe 3-18 Kohlenstoffatome besitzt, Alkylvinylethern, worin die Alkylgruppe 1-18 Kohlenstoffatome besitzt.

## Revendications

1. Composition mélangée à l'état fondu, comprenant :
(a) au moins un copolymère éthylène alcool vinylique ayant une teneur en éthylène copolymérisé de 20 à 50 % en moles et un degré de saponification d'au moins 90 %, et
(b) au moins un copolymère de
(i) 40 à 79 % en poids de comonomère éthylène,
(ii) 0,5 à 30 % en poids d'au moins un comonomère choisi dans le groupe constitué du monoxyde de carbone et du dioxyde de soufre,
(iii) 20 à 50 % en poids d'au moins un comonomère choisi dans le groupe constitué des acides carboxyliques insaturés, des dérivés insaturés d'acides carboxyliques autres que les anhydrides, et des éthers d'alkyle et de vinyle ; et
(iv) 0,01 à 5 % en poids d'au moins un comonomère contenant une fonctionnalité anhydride d'acide carboxylique pendante,
ledit copolymère de (b) étant présent en une quantité suffisante pour fournir une amélioration de ténacité à la composition à base d'éthylène alcool vinylique, ladite quantité étant de 1 à 100 parties en poids sur la base de 100 parties en poids du copolymère éthylène alcool vinylique, de préférence 5 à 50, de préférence encore 11 à 45, de toute préférence 15 à 25 parties en poids.

2. Composition mélangée à l'état fondu selon la revendication 1, dans laquelle le copolymère de (b) est présent en une quantité de 1 à 100 parties en poids pour 100 parties en poids du copolymère éthylène alcool vinylique de (a).

3. Composition mélangée à l'état fondu selon la revendication 1, dans laquelle le comonomère contenant une fonctionnalité anhydride d'acide carboxylique pendante est un comonomère greffé.

4. Composition mélangée à l'état fondu selon la revendication 3, dans laquelle le comonomère contenant une fonctionnalité anhydride d'acide carboxylique pendante est l'anhydride maléique.

5. Composition mélangée à l'état fondu selon la revendication 4, dans laquelle la quantité d'anhydride maléique est 0,05 à 1 % en poids sur la base du copolymère greffé.

6. Composition mélangée à l'état fondu selon la revendication 4, dans laquelle la quantité d'anhydride maléique est 0,1 à 0,5 % en poids sur la base du copolymère greffé.

7. Composition mélangée à l'état fondu selon la revendication 1, dans laquelle le comonomère de (ii) est le monoxyde de carbone.

8. Composition mélangée à l'état fondu selon la revendication 7, dans laquelle la quantité de monoxyde de carbone copolymérisé est 7 à 25 % en poids.

9. Composition mélangée à l'état fondu selon la revendication 7, dans laquelle la quantité de monoxyde de carbone copolymérisé est 8 à 15 % en poids.

10. Composition mélangée à l'état fondu selon la revendication 1, dans laquelle le comonomère de (iii) est choisi dans le groupe constitué des acides mono- ou dicarboxyliques insaturés ayant 3 à 18 atomes de carbone, des esters alkyliques de tels acides ayant 1 à 18 atomes de carbone dans le groupe alkyle, des alkyl nitriles insaturés ayant 3 à 18 atomes de carbone, des esters vinyliques d'acides carboxyliques saturés où le groupe acide a 3 à 18 atomes de carbone, des éthers d'alkyle et de vinyle où le groupe alkyle a 1 à 18 atomes de carbone.
